# EUROPEAN PATENT SPECIFICATION

(11) **EP 1 695 778 B1**
(45) Date of publication and mention of the grant of the patent: **10.07.2013**
(21) Application number: 04820207.1
(22) Date of filing: 07.12.2004
(51) Int. Cl.: B22F 3/00, B22F 3/105

(54) **LAMINATE MOLDING METHOD AND LAMINATE MOLDING DEVICE**
LAMINATFORMVERFAHREN UND LAMINATFORMVORRICHTUNG
PROCEDE ET DISPOSITIF DE MOULAGE DE LAMINES

(30) Priority: 11.12.2003 JP 2003413729
(43) Date of publication of application: 30.08.2006
(73) Proprietor: Yamamoto, Keijirou, Sagamihara-shi Kanagawa 228-0803 (JP); Tokunaga, Tsuyoshi, Sagamihara-shi Kanagawa 229-0029 (JP)
(72) Inventor: Yamamoto, Keijirou, Sagamihara-shi Kanagawa 228-0803 (JP); Tokunaga, Tsuyoshi, Sagamihara-shi Kanagawa 229-0029 (JP)
(74) Representative: Vossius & Partner
(86) International application number: PCT/JP2004/018212
(87) International publication number: WO 2005/056221

(56) References cited:
- JP-A- 2002 038 201
- US-A- 5 622 577
- TOKUNAGA T., E.A.: "Three dimensional formation by a two step laser irradition method using pure iron powder material", THE JOURNAL OF THE JAPAN SOCIETY FOR PRECISION ENGINEERING, vol. 65, no. 8, 1999,

## Description

### TECHNICAL FIELD

The present invention relates to a layered manufacturing method and a layered manufacturing device, and in more detail relates to a layered manufacturing method for manufacturing a desired solid object with powder as a raw material, and to a layered manufacturing device using the layered manufacturing method.

### BACKGROUND ART

Conventionally, the materialization of solid objects for which a drawing has been created using CAD (Computer Aided Design) using rapid prototyping (referred to as RP hereafter) has been performed a various fields. In particular, an RP system using layered manufacturing methods is a simple device and has a high degree of processing freedom compared to a machining center or the like. Layered manufacturing methods having this type of advantage are often applied to objects with resin or paper as a material, but there are problems in terms of strength and deterioration caused by aging. For this reason there has been rapid progress in research into solid body manufacture using layered manufacturing with metal and so forth as a material.

Among such layered manufacturing methods for solid bodies with metal as a material, a methods aimed at a solid object having high strength, there have been proposed (a) a method of manufacturing a solid body by first coating resin on the surface of material powder such as metal, and then sequentially layering cross sectional elements with resin sections that having been heated and fused by irradiation of laser light made to function as adhesive, and (b) directly heating and fusing powder material such as metal by a first type of laser irradiation, and forming a bulk sample. With this type of method, there is melting of specified regions due to laser irradiation, and congealing arises at the molten sections. However, with only this melting and congealing, cavities and resin remain inside a manufactured solid body, and sufficient strength is not obtained. There has therefore been a need for post processing such as evaporation of remaining resin components localized bonding of material particles has been promoted in a high temperature atmosphere to achieve a sintered state, or fusing of material having a lower melting point than the used material, such as metal, and penetration into cavity sections, and it is intended to improve strength with this type of post processing.

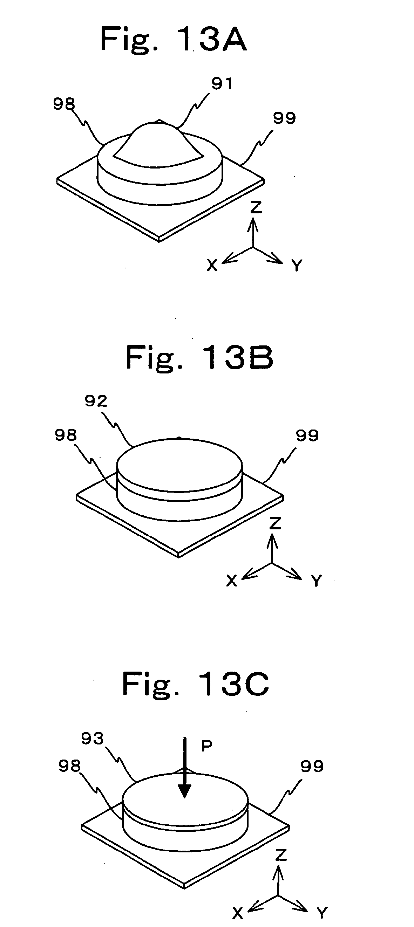

Accordingly, more recently there has been proposed a layered manufacturing method for metal etc. that can achieve high strength without the need for post processing such as sintering or using a low melting point material (refer non-patent document 1: hereafter referred to as "prior art example"). With the layered manufacturing method of this prior art example, as shown in Fig. 13A to Fig. 14B, first of all a material powder 91 is supplied (refer Fig. 13A). In Fig. 13A, an example is shown where material powder 91 for a layer to be newly layered on a compressed material body 98 having part of a desired shape already layered an inner part is supplied.

Continuing on, the material powder 91 is leveled using a blade or the like, and the material powder layer 92 is formed (refer Fig. 13B). The material powder layer 92 is then compressed at a high pressure P to form a compressed material layer 93 (refer Fig. 13C).

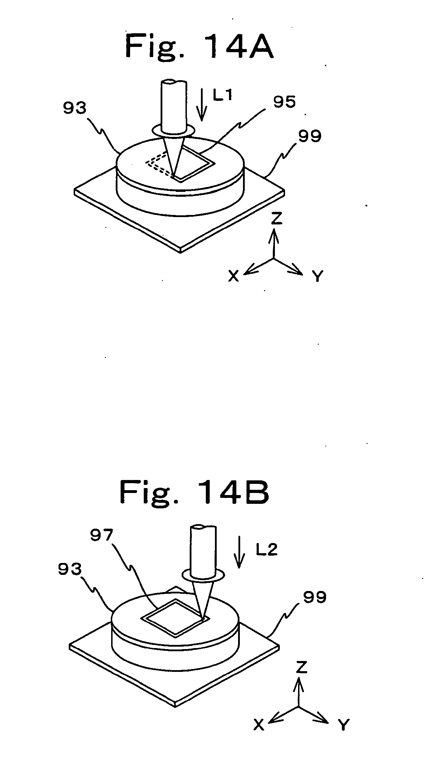

Next, a region of the compressed material layer 93 corresponding to a designed cross sectional shape at a position of the compressed material layer 93 in the layer direction (+Z direction) of the desired solid body is irradiated using laser light L1 of a comparatively low power. As a result, the material of the irradiated region is heated and melts. Irradiation of laser light L1 to the molten section is then stopped, allowing the material to set. As a result of this, a cross sectional element 95 is formed inside the compressed material layer 93 (refer Fig. 14A). Incidentally, by scanning a region of the compressed material layer corresponding to the designed cross sectional shape with the laser light L1 at a suitable strength, localized melting and setting of the material is carried out in a continuous manner.

Next, laser light L2 at a higher power than the laser light L1 is irradiated to the cross sectional element 95 to heat it, thus joining and integrating the section that has already been layered with the cross sectional element. As a result, a layered body 97 with the cross sectional element 95 newly layered is formed (refer Fig. 14B). Thereafter, the desired solid body is manufactured with high strength by sequentially advancing the layered manufacture in the same way as described above.

Non-patent publication 1
Tokunaga et. al. "Three dimensional manufacturing using pure iron powder material with a 2-step processor irradiation method" Magazine of the Japan Society for Precision Engineering, Volume 65, No. 8, pages 1136 - 1140, August 5th, 1999.

### DISCLOSURE OF THE INVENTION

### <Problems to be Solved by the Invention>

The above described layered manufacturing method of the prior art example is exceptional from the point of view of manufacturing a solid body with high strength. However, in the related art example, in order to create cross sectional elements of each layer it is necessary to form material powder layers on sections that have already been layered, which means that it is necessary for a movable stage, which is the place where the material powder layers are formed, to be able to withstand high pressure, and it is necessary to form material powder layers after removing sections that have already been layered from a stage for laser irradiation and again return to the stage for laser irradiation.

Also, with the prior art example, although it is possible to output the two types of laser light L1 and L2 having different power using a single laser oscillator, it is necessary to irradiate laser light twice, such as irradiation of laser light L1 for melting and setting of the compressed powder body, and irradiation of laser light L2 for combining with the already layered sections.

As a result, a layered manufacturing device adopting the layered manufacturing method of the prior art example is inevitably made large in scale, and it is necessary to carry out many steps, such as compression of material powder and laser irradiation. Therefore, with the prior art example manufacture of a solid body of high strength could not be said to be simple.

JP-2002-038201 A and US 5622 577 A disclose the technological background.

The present invention has been conceived in view of the above described situation, and an object of the invention is to provide a layered manufacturing method that can manufacture a solid body of high strength simply and quickly.

Another object of the present invention is to provide a layered manufacturing device that can manufacture a solid body of high strength simply and quickly.

These objects are achieved with the features of the claims.

With the layered manufacturing method of the present invention, first of all, in the flat plate material member preparing step, material powder is compressed and formed to prepare a plurality of flat plate material members. Here, the flat plate material is not broken up by its own weight or being loaded onto a stage using a robot arm etc., and powder material is compressed to such an extent that material powder is not scattered as a result of laser light irradiation in an initial cross sectional element formation step and layered cross sectional element formation step, which will be described later.

Next, in an initial cross sectional member formation step, laser light is irradiated from one direction side to a region of a flat plate member corresponding to a designed cross sectional shape of an initial one of the flat plate member, to form an initial cross sectional element that is hardened after locally heating and melting. One side of the initial cross sectional member formed in this way is not level due to surface tension etc. Therefore, continuing on, in an initial surface leveling step a surface of the one side of the initial cross sectional member is leveled. In this manner, manufacture of a section of a layer position of the initial flat plate member is carried out.

Subsequently, in a flat plate material member layering step, the next flat plate material member is arranged on one side surface of a section already manufactured having a leveled one side surface. As a result, a new flat plate material member is mounted in a state substantially adhered to one side surface of an already formed section.

Continuing on, in a layered cross sectional element formation step, laser light is irradiated from one side to a region of the new flat plate member corresponding to a designed cross sectional shape of a layer position of the new flat plate member of the desired solid object. As a result, the region that has been irradiated by the laser light is locally heated and melted. After that, if laser light irradiation is stopped, the molten section sets to form a layered cross sectional element, while at the same time the layered cross sectional element is integrated with an already formed section at an opposite side to the one side.

One side of the layered cross sectional element formed in this way is not level due to surface tension, similarly to the above described case of the initial cross sectional element. Therefore, in a layered surface leveling step, the one side surface of the layered cross sectional element is leveled.

After that, a desired solid body having high strength is formed by sequentially repeating the above described flat plate material member formation step, layered cross sectional element formation step and layered surface leveling step.

Specifically, with the layered manufacturing method of the present invention, since it is no longer necessary to form material powder layers on sections that have already been layer manufactured in order to create cross sections elements of each layer, it is no longer necessary for the stage device used for laser light irradiation to be able to withstand high pressure. There is also no need to form material powder layers after removing the sections that have already been layer manufactured from the stage for laser light irradiation and again return to the stage for laser light irradiation. There is also no need to carry out two stage irradiation using two types of laser light L1 and L2 of differing power. Further, there is no need to perform a mixture of steps such as compressing material powder and laser irradiation.

Therefore, according to the layered manufacturing method of the present invention it is possible to manufacture a solid body of high strength simply and quickly.

With the layered manufacturing method of the present invention, it is possible for porosity of the flat plate material members to be less than 50%. In this case, the flat plate material is not broken up by its own weight or being loaded onto a stage using a robot arm and so forth, and it is possible to compress powder material to such an extent that material powder is not scattered as a result of laser light irradiation in an initial cross sectional element formation step and layered cross sectional element formation step, which will be described later. In the case of, for example, pure iron powder with average particle diameter of 100 µm is used as the material powder, it is possible to make a proportion of material powder 50% or more in the member by compressing at 100 MPa or greater.

With the layered manufacturing method of the present invention, as the material powder, it is possible to use powdered metals such as iron (Fe), titanium (Ti), or nickel (Ni), or use a powdered alloy such as nickel - molybdenum (Ni-Mo) alloy steel. Amongst these also, when a Ni-Mo type alloy, which will be described later, is used, it is possible to obtain manufactured products that are high in strength and have excellent wear resistance. Incidentally, metals or alloys other than those mentioned above, can be adopted as material as long as they are metals or alloys that experience a melting and solidification process. Also, polyamide type plastics such as nylon, glass such as soda glass, and ceramics such as zirconia can also be adopted as the material.

Also, with the layered manufacturing method of the present invention, it is possible to choose the respective materials of the flat plate material members depending on respective layer positions of the flat plate material members. In this case, it is possible to manufacture a layer manufactured body with a material having a desired strength according to position of the layer manufactured body in a layer direction.

Alternatively, with the layered manufacturing method of the present invention, it is possible to further comprise an initial surplus material removal step of removing part of the initial one of the flat plate material members other than the initial cross sectional element, carried out between forming the initial cross sectional element and leveling the initial surface, and a layer surplus material removal step of removing part of the layered flat plate material members other than the layered cross sectional element, carried out between formation of the layered cross sectional element and leveling of the layered surface. In this case, prior to leveling of the cross sectional element, a material section other than the cross section element, namely a compressed material section, is removed, which means that it is possible to prevent chips of compressed powder remaining on the surface after leveling. As a result it is possible to arrange the next flat plate member on the leveled surface without any gaps, and it is possible to integrate adjacent cross sectional elements smoothly.

It is also possible for the layered manufacturing method of the present invention to further comprise a step side surface shaping step of shaping a side surface of a cross sectional element section formed first, immediately before or immediately after leveling of the initial surface, and immediately before or immediately after leveling of the layered surface. In this case, after forming each cross sectional element, it is possible to precisely line up the shape of a formed cross sectional element with a designed cross sectional shape before forming the next cross sectional element. It is therefore possible to manufacture with good precision, even for a solid body having a smooth shape.

A layered manufacturing device of the present invention is for manufacturing a desired solid object, with a plurality of flat plate material members formed by compressing powder raw material as starting material, and comprises a stage device, having a stage for mounting the flat plate material members, capable of driving the stage three dimensionally; conveying means for conveying the plate material members towards the stage; laser light irradiation means for irradiating laser light from one side in order to locally heat and melt a specified region of the flat plate material members; and surface leveling means for leveling one side surface of a cross sectional element formed by solidifying after being melted by the laser light.

With this layered manufacturing device, as a starting material of the plurality of flat plate material members formed by compressing material powder, first of all the conveying means mounts an initial flat plate material member on a stage of the stage device. Continuing on, using laser light from the laser light irradiation means, while moving the stage laser light is irradiated from one direction side to a region of a flat plate member corresponding to a designed cross sectional shape of an initial one of the flat plate member, to form an initial cross sectional element that is hardened after being locally heated and melted. Then, the surface leveling means levels the one side surface of the initial cross sectional element. In this manner, manufacture of a section of the initial layer position of the flat plate member is carried out.

Next, the conveying means arranged the next flat plate material member on one side surface of a section already manufactured having a leveled one side surface. Continuing on, using laser light from the laser light irradiation means, while moving the stage irradiation is performed from one side to a region of a flat plate member corresponding to a designed cross sectional shape of an initial one of the flat plate member. As a result, the region that has been irradiated by the laser light is locally heated and melted. After that, as a result of setting of the molten section a layered cross sectional element is formed, while at the same time the layered cross sectional element is integrated with an already formed section at an opposite side to the one side. Then, the surface leveling means levels the one side surface of the layered cross sectional element.

After that, the desired solid object is formed to high strength by sequentially repeating layering of the flat plate material members, formation of layer cross sectional elements, and leveling of one side surface of the flat plate material members having layer cross sectional members.

Specifically, with the layered manufacturing device of the present invention, it is possible to manufacture a desired solid object using the above described layered manufacturing method of the present invention. Therefore, according to the layered manufacturing device of the present invention it is possible to manufacture a solid body of high strength simply and quickly.

With the layered manufacturing device of the present invention, it is possible to further comprise surplus material removal means for removing surplus material section other than the cross sectional element. In this case, prior to leveling of one side surface of the cross sectional element by the surface leveling means, a material section other than the cross section element is removed using the surplus material removal means, making it possible to prevent chips of compressed powder remaining on the surface after leveling.

With the layered manufacturing device of the present invention it is also possible to provide side surface shaping means for shaping a side surface of a cross-sectional element having the one side surface leveled. In this case, after forming each cross sectional element using the side surface shaping means, it is possible to precisely line up the shape of a formed cross sectional element with a designed cross sectional shape before forming the next cross sectional element. It is therefore possible to manufacture with good precision, even for a solid body having a smooth shape.

### <Effects of the invention>

As has been described above, according to the layered manufacturing method of the present invention, there is the remarkable effect of it being possible to manufacture a solid body of high strength simply and quickly.

Also, according to the layered manufacturing device of the present invention, there is the remarkable effect of it being possible to manufacture a solid body of high strength simply and quickly.

### BRIEF DESCRIPTION OF THE DRAWINGS

Fig. 1 is a drawing schematically showing the structure of a layered manufacturing device for using a layered manufacturing method of one embodiment of the present invention;
Fig. 2 is a drawing for describing the shape of a solid object it is desired to make;
Fig. 3A is the first drawing for describing a step of a layered manufacturing method of one embodiment of the present invention;
Fig. 3B is a drawing showing a cross section of the flat plate material member 71₁ of Fig. 3A;
Fig. 4A is a drawing for describing an irradiation method for irradiated light;
Fig. 4B is a drawing for describing overlap ratio of irradiation spots in Fig. 4A;
Fig. 5A is the second drawing for describing a step of a layered manufacturing method of one embodiment of the present invention;
Fig. 5B is a drawing showing a cross section of the flat plate material member 71₁ and cross sectional element 75₁ of Fig. 5A;
Fig. 6A is the third drawing for describing a step of a layered manufacturing method of one embodiment of the present invention;

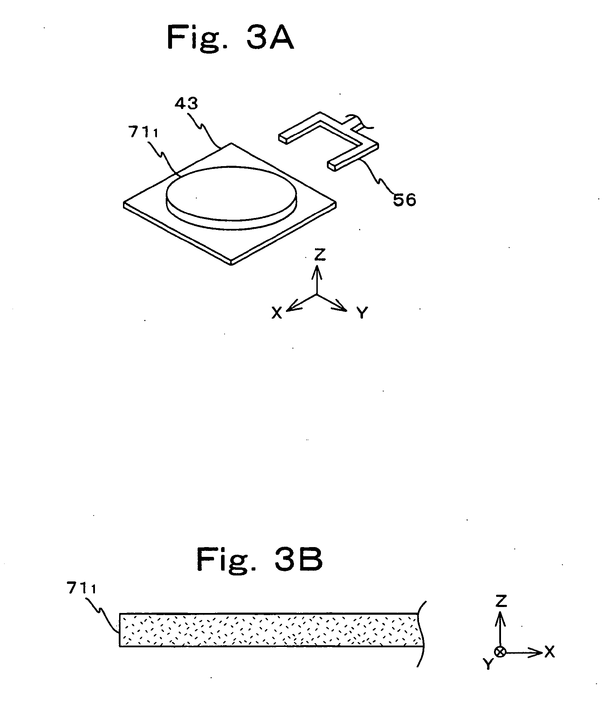

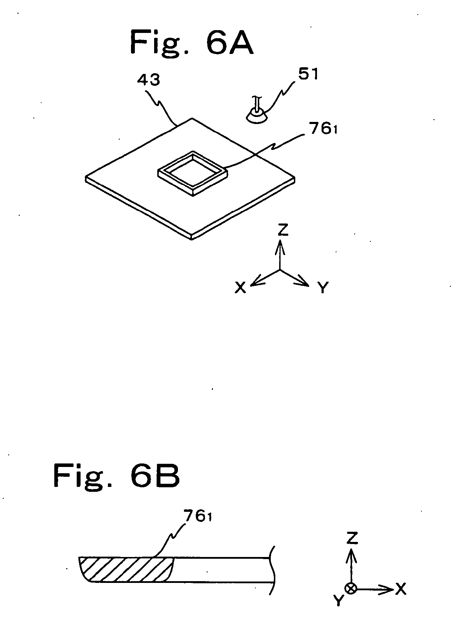

Fig. 3B is a drawing showing a cross section of the cross sectional element 76₁ of Fig. 6A;

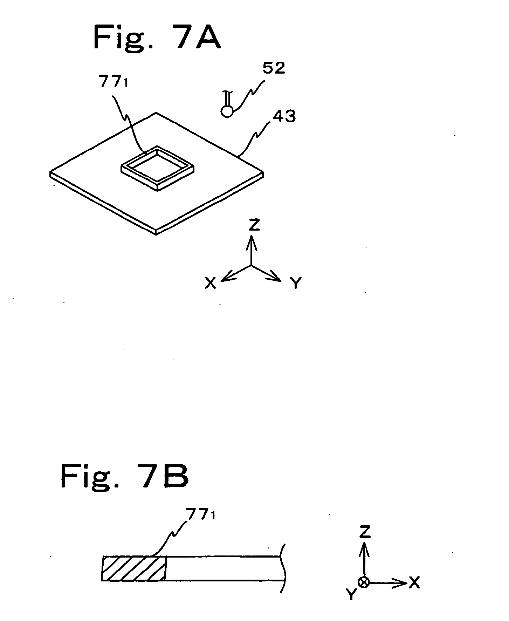

Fig. 7A is the fourth drawing for describing a step of a layered manufacturing method of one embodiment of the present invention;
Fig. 7B is a drawing showing a cross section of the cross sectional element 77₁ of Fig. 7A;

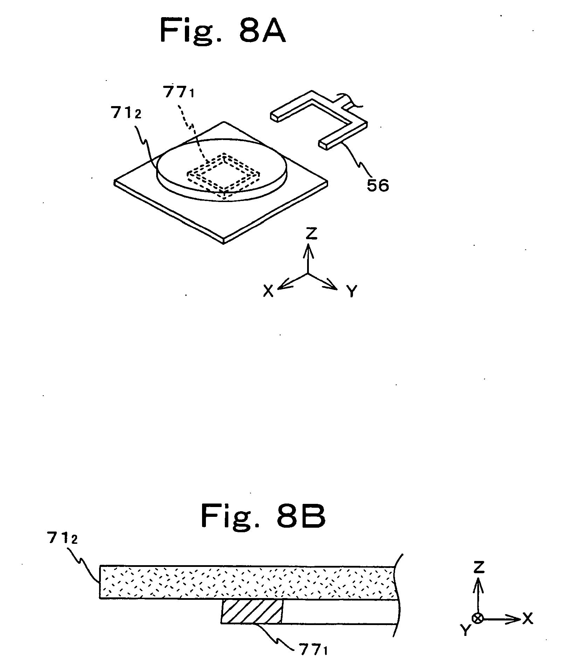

Fig. 8A is the fifth drawing for describing a step of a layered manufacturing method of one embodiment of the present invention;
Fig. 8B is a drawing showing a cross section of the flat plate material member 71₂ and cross sectional element 77₁ of Fig. 8A;

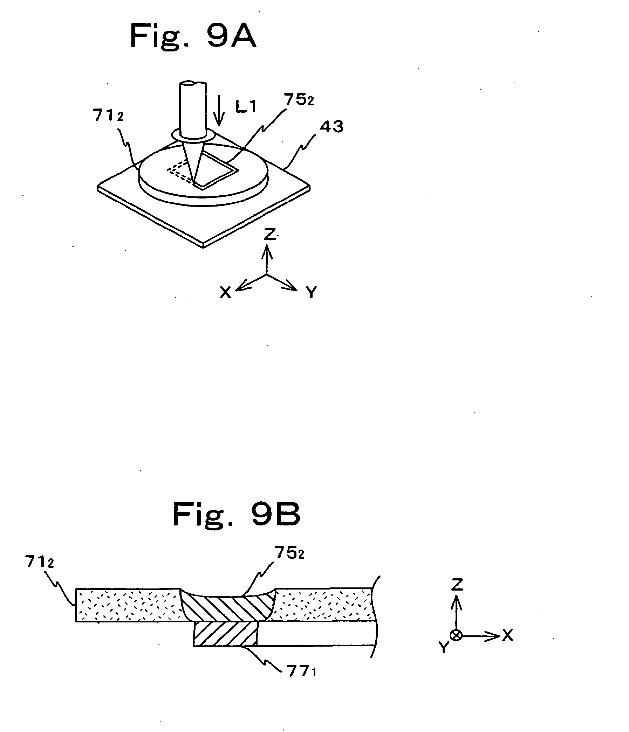

Fig. 9A is the sixth drawing for describing a step of a layered manufacturing method of one embodiment of the present invention;
Fig. 9B is a drawing showing a cross section of the cross sectional element 77₁, flat plate material member 71₂, and cross sectional element 75₂ of Fig. 9A;

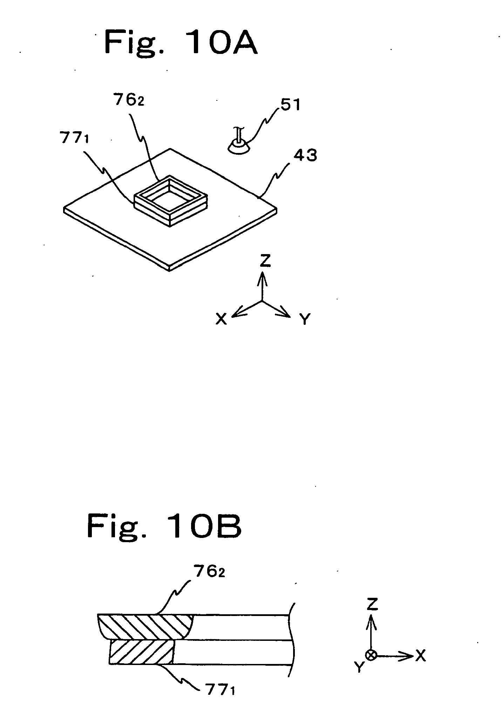

Fig. 10A is the seventh drawing for describing a step of a layered manufacturing method of one embodiment of the present invention;
Fig. 10B is a drawing showing a cross section of the cross sectional element 77₁ and cross sectional element 76₂ of Fig. 10A;

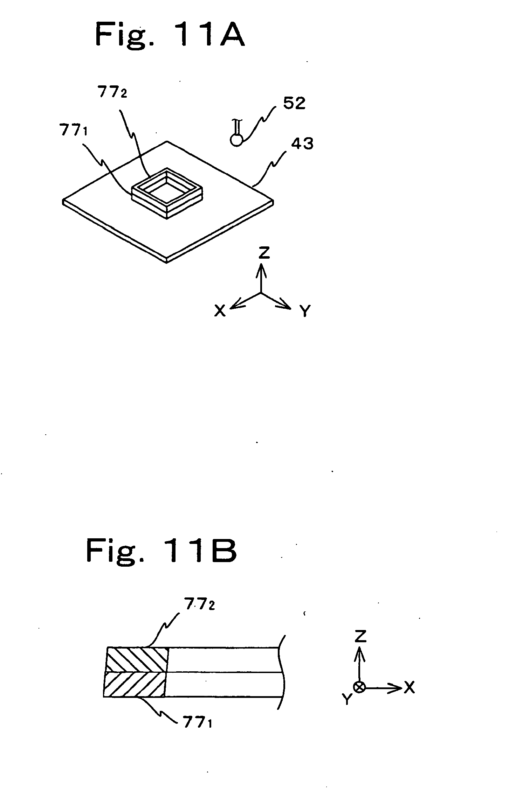

Fig. 11A is the eighth drawing for describing a step of a layered manufacturing method of one embodiment of the present invention;
Fig. 11B is a drawing showing a cross section of the cross sectional element 77₁ and cross sectional element 77₂ of Fig. 11A;

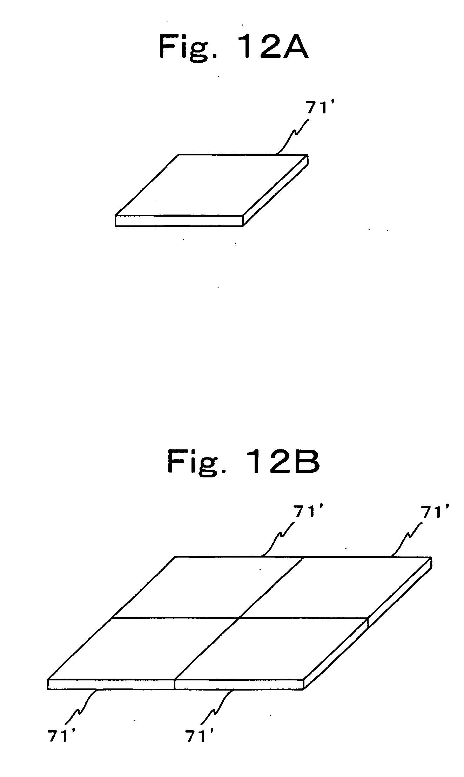

Fig. 12A is a drawing for describing a first modified example;
Fig. 12B is a drawing for describing a second modified example;
Fig. 13A is the first drawing for describing a layered manufacturing method of the prior art example;
Fig. 13B is the second drawing for describing a layered manufacturing method of the prior art example;
Fig. 13C is the third drawing for describing a layered manufacturing method of the prior art example;
Fig. 14A is the fourth drawing for describing a layered manufacturing method of the prior art example; and
Fig. 14B is the fifth drawing for describing a layered manufacturing method of the prior art example.

### BEST MODE FOR CARRYING OUT THE INVENTION

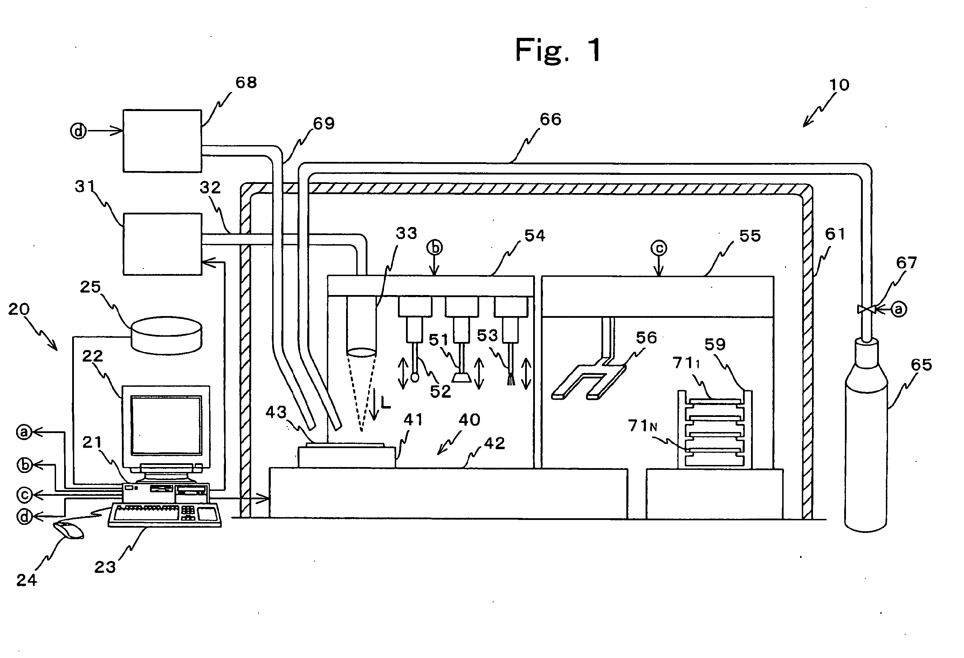

One embodiment of the present invention will be described in the following with reference to Fig. 1 to Fig. 11B.

The schematic structure of a layered manufacturing device 10 of one embodiment of the present invention is shown in Fig. 1. As shown in Fig. 1, this layered manufacturing device 10 is comprised of (a) a computer system 20 for designing a desired solid object and storing design data, (b) a laser unit 31 controlled by the computer system 20 for generating laser light, (c) an irradiation optical system 33 for irradiating laser light radiated from the laser unit 31 via optical fiber to a flat plate material member 71ⱼ (J = 1 to N) mounted on a stage 41, which will be described later, and (d) a stage unit 40 controlled by the computer system 20 and having a stage 41 that can be moved in three axial directions of the X axis direction, the Y axis direction and the Z axis direction.

Here, the computer system 20 comprises (i) a processing unit 21 for executing various programs such as a solid object design program, and performing overall control of the layered manufacturing device 10, (ii) a display unit 22 for displaying graphics and text or the like in response to instructions of the processing unit 21, (iii) a stroke unit 23 such as a keyboard for an operator to input instructions and character data for the processing unit 21, (iv) a pointing device 24 such as a mouse for a user to designate positions on a display region of the display unit 22 for the processing unit 21, and (v)a storage unit 25 for storing data for a designed solid object etc.

Also, it is possible to suitably adopt a YAG laser generator that is capable of outputting a laser of peak power 2kW and pulse width of about 10 ms to a 0.5 mm flat plate material member as the laser unit 31, when the material powder is pure iron powder having an average particle diameter of 100 µm

It also becomes possible for the irradiation optical system 33 to vary a focus position along the Z axis direction under control of the computer system 20.

The stage unit 40 comprises (i) the above described stage 41, and (ii) a drive unit 42 for driving the stage 41 in three directions along to XY and Z axis in response to command STC from the computer system 20 (in more detail, the processing unit 21). A base plate 43 having sufficient heat resistance is also mounted on the stage 41.

The layered manufacturing device 10 also comprises (e) a leveling tool 51 such as a grindstone, being controlled by the computer system 20, for leveling a +Z direction side surface of a member mounted on the stage 41 so as to be parallel to the XY surfaces, (f) an attrition tool 52 such as a ball end mill, controlled by the computer system 20, for grinding a surface of a member mounted on the stage 41 to shape with a finer precision than a layer step difference, and (g) an internal surplus material removal tool 53 such as a wire brush, controlled by the computer system 20 so as to remove surplus material on the stage 41. These leveling tool 51, attrition tool 52 and internal surplus material removal tool 53, and the above described irradiation optical system 33, are attached to a base member 54. The leveling tool 51, attrition too 52 and internal surplus material removal tool 53 are then respectively independently movable in the Z axis direction under the control of the computer system 20. In coincidentally, in this specification the term "attrition" is used with a meaning also including cutting.

The layered manufacturing device 10 also comprises (h) a conveying unit 55 having a robot arm 56. This robot arm 56 is capable of rotation in the three axial direction X, Y and Z, and rotation around the Z axis, under control of the computer system 20. Under control of the computer system 20, the robot arm 56 sequentially loads flat plate material members 71₁, 71₂,.... 71_{N} housed in the material member housing unit 59 onto the stage 41.

Also, with the layered manufacturing device 10, the above described irradiation optical system 33, stage device 40, leveling tool 51, attrition tool 52, base member 54 and conveying unit 55 are housed in an internal space formed by a housing wall 61. Inert gas such as argon is supplied from a gas cylinder 65 placed outside the housing wall 61 through piping 66 to the vicinity of an irradiation position for irradiated light L in an internal space formed by the housing wall 61. Here, supply amount of inert gas from the gas cylinder 65 to the internal space formed by the housing wall 61 can be adjusted by the computer system 20 controlling degree of opening and closing of a gas supply valve 67.

The layered manufacturing device 10 also comprises a suction machine 68, and surplus material of the stage 41 can be sucked up through piping 69. Here, a suction operation by the suction machine 68 can be controlled by the computer system 20.

Incidentally, the flat plate material members 71₁, 71₂, ..., 71_{N} are formed by compressing material powder under high pressure. Here, the flat plate material members 71₁, 71₂, ..., 71_{N} are not broken up by their own weight or by being loaded onto the stage 41 using the robot arm 56, and powder material is compressed to such an extent that material powder is not scattered as a result of irradiation of laser light L. For example, in the case of a material powder of pure iron powder having an average particle diameter of 100 µm, by compressing at 100 MPa or greater to give a proportion of material powder itself in respective flat plate material members 71₁, 71₂, ..., 71_{N} of 50% or greater, there is no breaking up due to their own weight or being loaded onto the stage 41 using the robot arm 56, and powder material is not scattered as a result of irradiation of laser light L.

Thickness of a flat plate material member 71ⱼ (j=1 to N) is determined to an appropriate value according to type of material powder and power of laser light L. An appropriate value of thickness for a flat plate material member 71ⱼ according to power of laser light L is determined by experimentation beforehand, etc.

Next, description will be given of operation layered manufacturing operation using the layered manufacturing system having the above described structure.

As a pre-requisite, the flat plate material members 71₁, 71₂, ..., 71_{N} are already formed, and housed in the material member housing section 59. Also, the material member housing section 59 housing the flat plate material members 71₁, 71₂, ..., 71_{N} is placed at a specified position in an internal space formed by the housing wall 61.

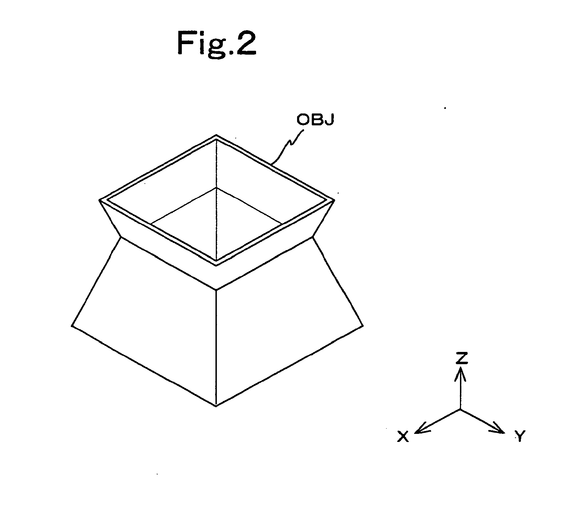

First of all, a designer designs a desired solid object using the computer system 20. A particular design operation is carried by the user operating the stroke unit 23 and pointing device 24 while referring to display of the display unit 22, out in a state where a three dimensional CAD program has been executed by the processing section. Data of the solid object designed in this way, and cross sectional shape data for each slice when the solid object is sliced at a horizontal surface (plane parallel to the XY surface) and to a specified thickness in the vertical direction (Z direction) are stored in the storage unit 25. Incidentally, as shown in Fig. 2, the designed solid object has varied length of square along the Z direction, which shows an XY cross section of solid object OBI.

Once CAD design as described above is completed, the computer system 20 controls the drive unit 42 to move the stage 41 so that the stage 41 is placed within the movable range of the robot arm 56 of the conveying unit 55. Continuing on, the computer system 20 controls the conveying unit 55 to withdraw a flat plate material member 71₁ from the material member housing unit 59, and loads the flat plate material member 71₁ on to the base plate 43 on the surface of the stage 41 (refer to Fig. 3A). The flat plate material member 71₁ in this state is entirely flat, as shown representatively by the XZ cross section shown in Fig. 3B.

Next, the computer system 20 controls the drive unit 42 to move the stage 41 so that the stage 41 is placed at a -Z direction side of the irradiation optical system 33. Continuing on, the computer system 20 controls the drive unit 42 to move the stage 41 in the Z axis direction so that a Z axis position of a +Z direction side surface of the flat plate material member 71₁ approaches a focal plane of the irradiated light L projected from the irradiation optical system 33. Incidentally, when the stage 41 is moving in the Z axis direction, the + Z direction side surface of the flat plate material member 71₁ is moved so has to have a specified defocus amount with respect to the irradiated light L. This specified defocus amount is determined by prior experimentation etc.

Next, the computer system 20 controls the drive unit 42, and controls the laser unit 31 while the stage 41 is being moved parallel to the XY plane to carry out localized heating by irradiating irradiated light L to a region of the flat plate material member 71₁ corresponding to the designed cross sectional shape. At the time of this heating, the computer system 20 appropriately supplies inert gas such as argon (Ar) or nitrogen (N₂) for example to the vicinity of the heated section by controlling opening and closing of the gas supply valve 67, and prevents deterioration due to oxidation of the material etc. In this embodiment, by the way, inexpensive nitrogen gas (N₂) is used as the inert gas.

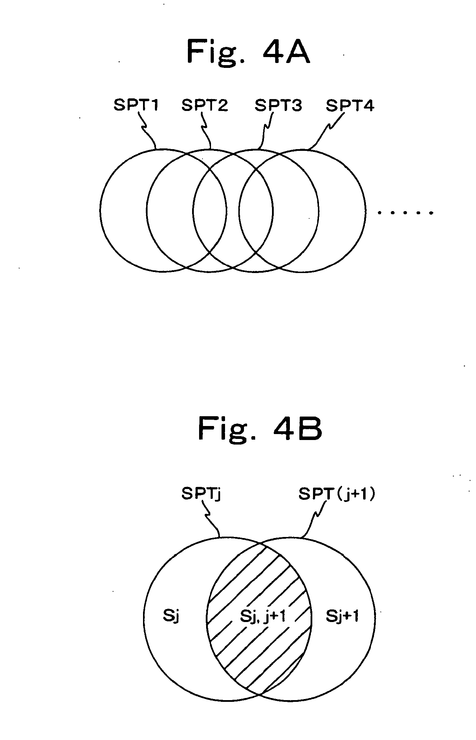

Localized heating by the irradiated light L is carried out by adjusting a pulse gap and amount of stage movement so that each spot shaped irradiation region SPT1, SPT2, ... formed by the irradiated light (pulse light) on the + Z direction side surface of the flat plate material member 71₁ overlaps the next irradiation region SPT2, SPT3, ..., as shown in Fig. 4A. Incidentally, it is preferable that an overlapping surface area Sⱼ, j+1 of the irradiation region SPTj and the next irradiation region SPT(j+1) shown in Fig. 4B is larger than 50% or more of the surface area of the irradiation region SPTj (=Sⱼ+Sⱼ, _{J+1}) for forming a solid object with high strength. In doing this, it is possible to form a high strength solid object with the same strength as is achieved with the conventional two step laser light irradiation. Incidentally, localized heating of the flat plate material member 71₁ by the irradiation of irradiated light is carried out in an inert gas atmosphere supplied from the gas cylinder 65.

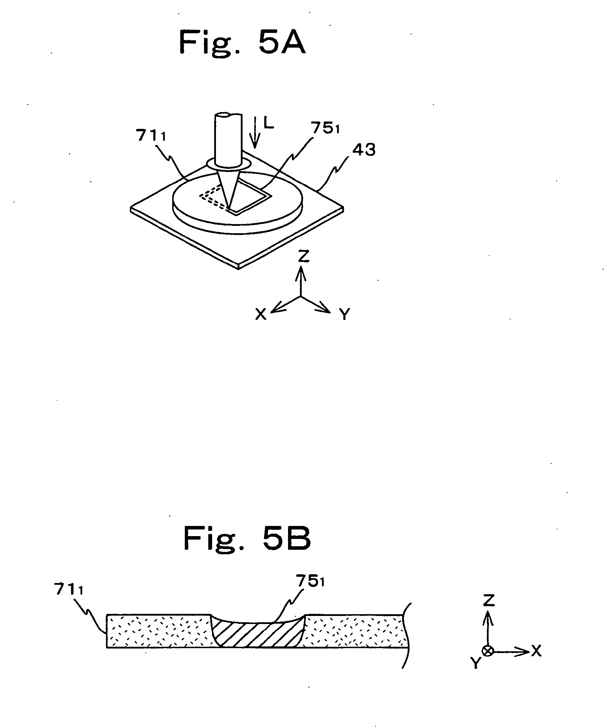

As a result of irradiation of irradiated light L in this manner, a cross section element 75₁ of the first layer is formed (refer to Fig. 5A). Incidentally, when forming the cross section element 75₁ of the first layer, the cross section element 75₁ of the first layer is temporarily fixed to the base plate 43. This temporary fixing is achieved by slightly weakening the power of irradiated light L compared to at the time of formation of the cross sectional elements for the second and subsequent layers, as will be described later.

An XZ cross section of the flat plate material member 71₁ for a section extending along the Y axis direction of the cross sectional element 75₁ formed in this way is shown in Fig. 5B. As representatively shown in Fig. 5B, this cross sectional element 75₁ is such that a boundary section between a region irradiated with irradiated light L and a region that has not been irradiated is shaped like a truncated crescent moon. Also, a Z axis direction position of a + Z direction side surface of a central part of the cross sectional element 75₁ is offset more to the -Z direction than the Z axis direction position of a +Z direction side surface of the flat plate material member 71₁ before irradiation.

Continuing on, surplus material sections of the flat plate material member 71₁ other than the cross sectional element 75₁ is removed. When removing the surplus material sections, the computer system 20 mechanically removes the surplus material sections using the leveling tool 51 and the internal surplus material removal tool 53 while appropriately moving the stage 41, and sucks away material using the suction unit 68. Incidentally, when performing mechanical removal, with respect to the inside of a closed region forming the cross sectional element 75₁, sections of surplus material are scraped out using the internal surplus material removal tool 53.

Next, the computer system 20 controls the drive unit 42 to move the stage 41 so that the stage 41 is placed at a -Z direction side of the leveling tool 51. Continuing on, the computer system 20 controls the drive unit 42 and the leveling to 51 to position a +Z direction side surface of the cross sectional element 75₁ close to an attrition member of the leveling tool 51. After that, the computer system 20 controls the drive unit 42 and the leveling tool 51 to level a +Z direction side surface of the cross sectional element 75₁. As a result, the cross sectional element 75₁ is processed into the cross sectional element 76₁ having the +Z direction side surface leveled (refer to Fig. 6A). An XZ cross section of a section of the cross sectional element 76₁ formed in this way extending along the Y axis direction is shown in Fig. 6B.

Next, the computer system 20 controls the drive unit 42 to move the stage 41 so that the stage 41 is placed at a -Z direction side of the attrition tool 52. Continuing on, the computer system 20 controls the drive unit 42 and the leveling to 51 to position a +Z direction side surface of the cross sectional element 76₁ close to an attrition member of the attrition tool 52. After that, the computer system 20 controls the drive unit and the attrition tool 52 to grind the side surface of the cross sectional element 76₁ to conform accurately with the designed shape. As a result, a shaped cross sectional element 77₁ with the cross sectional element 76₁ shaped is formed (refer to Fig. 7A). An XZ cross section of a section of the formed cross sectional element 77₁ extending along the Y axis direction is shown in Fig. 7B. The shaped cross sectional element 77, formed in this way constitutes a manufactured body of this stage.

Next, the computer system 20 controls the drive unit 42 to move the stage 41 so that the stage 41 is placed within the movable range of the robot arm 56 of the conveying unit 55. Continuing on, the computer system 20 controls the conveying unit 55 to withdraw a flat plate material member 71₂ from the material member housing unit 59, and loads the flat plate material member 71₂ on to shaped cross sectional member 77₁ mounted on the base plate 43 (refer to Fig. 8A). An XZ cross section of a section of the formed cross sectional element 77₁ in this state extending along the Y axis direction is shown in Fig. 8B. As shown in Fig. 8B, the flat plate material member 71₂ is mounted on a +Z direction side surface of the shaped cross sectional member 77₁, so as to be completely adhered.

Next, similarly to the case for the flat plate material member 71₁, the computer system 20 controls the drive unit 42 so move the stage 41 so that the stage 41 is at a -Z direction side of the irradiation optical system 33, and after that moves the stage 41 in the Z axis direction so that a Z axis position of a Z direction side surface of the flat plate material member 71₂ is close to the focal plane of irradiated light L irradiated from the irradiation optical system 33. Then, similarly to the case for the flat plate material member 71₁, the computer system 20 controls the drive unit 42, and controls the laser unit 31 while the stage 41 is being moved parallel to the XY plane to carry out localized heating by irradiating irradiated light L of sufficient power to a region of the flat plate material member 71₂ corresponding to the designed cross sectional shape, similarly to the case of the flat plate material member 71₁. As a result, the second layer cross sectional element 75₂ integral with the shaped cross sectional member 77₁ is formed, integral with the cross sectional element 75₁ (refer to Fig. 9A). An XZ cross section of the flat plate material member 71₁ and the flat plate material member 71₂ is shown in Fig. 9B, wherein both members are extending along the Y axis direction of the cross sectional element 75₂ formed in this way. As representatively shown in Fig. 9B, this cross sectional element 75₂ is such that a boundary section between a region irradiated with irradiated light L and a region that has not been irradiated is shaped like a truncated crescent moon, similarly to the case for the cross sectional element 75₁ described above. Also, a Z axis direction position of a + Z direction side surface of a central part of the cross sectional element 75₂ is offset more to the -Z direction than the Z axis direction position of a +Z direction side surface of the flat plate material member 71₂ before irradiation.

Next, surplus material sections of the flat plate material member 71₂ other than the cross sectional element 75₂ are removed. When removing the surplus material sections, the computer system 20 mechanically lops off the surplus material sections using the leveling tool 51 and the internal surplus material removal tool 53 while appropriately moving the stage 41. Suction removal is then performed using the suction unit 68. Continuing on, similarly to the case for the cross sectional member 75₁, the computer system controls the drive unit 42 to move the stage 41 so that the stage 41 is at a -Z direction side of the leveling tool 51, and after that the computer system 20 controls the drive unit 42 and the leveling tool 51 so as to position a +Z direction side surface of the cross sectional element 75₂ close to the grinding member of the leveling tool 51.

Then, similarly to the case for the cross sectional element 75₁, the computer system 20 controls the drive unit 42 and the leveling tool 51 to level a +Z direction side surface of the cross sectional element 75₂. As a result, the cross sectional element 75₂ is processed into the cross sectional element 76₂ having the +Z direction side surface leveled (refer to Fig. 10A). An XZ cross section of a section of the cross sectional element 76₂ formed in this way extending along the Y axis direction is shown in Fig. 10B.

Next, similarly to the case for the flat plate material member 71₁, the computer system controls the drive unit 42 to move the stage 41 so that the stage 41 is at a -Z direction side of the attrition tool 52, and after that the computer system 20 controls the drive unit 42 and the leveling tool 51 so as to position a +Z direction side surface of the cross sectional element 76₂ close to the grinding member of the attrition tool 52. Then, similarly to the case for the flat plate material member 71₁, the computer system 20 controls the drive unit 42 and the attrition tool 52 to grind the side surface of the cross sectional element 76₂ to conform accurately with the designed shape. As a result, a shaped cross sectional element 77₂ with the cross sectional element 76₂ shaped is formed (refer to Fig. 11A). An XZ cross section of a section of the formed cross sectional element 77₂ extending along the Y axis direction is shown in Fig. 11B. The shaped cross sectional element 77₁ and the shaped cross sectional element 77₂ formed in this way are integrated, constituting a manufactured body of this stage.

After that, similarly to layered manufacturing for the second layer described above, layered manufacturing for the third and subsequent layers is carried out. Then, finally, the desired solid object OBJ is formed with high strength and high accuracy.

As has been described above, with this embodiment, after preparing a plurality of flat plate material members 71₁ to 71_{N} by compressing material powder, a region of an initial flat plate material member 71₁ corresponding to a designed cross sectional shape is irradiated with irradiated light (laser light) L, to form an initial cross sectional element 75₁ that is hardened after being locally heated and melted. Continuing on, the surface of the initial cross sectional member 75₁ is leveled.

Next, the next flat plate material member 71ₖ (k=2 to N) is arranged on one side surface of a section already manufactured having a leveled one side surface. As a result, a new flat plate material member is mounted in a state substantially adhered on the surface of an already formed section. Then, irradiated light is irradiated to a region of the new flat plate material member 71ₖ corresponding to the designed cross sectional shape of the layer position of the new flat plate material member 71ₖ, and a layer cross sectional member 75ₖ is formed by hardening after localized heating and melting, and integrated with an already formed section. Continuing on, the surface of the layer cross sectional member 75ₖ is leveled.

After that, a desired solid body having high strength is formed by sequentially repeating the above described flat plate material member layering, layered cross sectional element formation and layered surface leveling.

Therefore, according to this embodiment it is possible to manufacture a solid body of high strength simply and quickly.

Also with this embodiment, for the flat plate material members 71₁ to 71_{N,} the volume occupied by material is larger than the volume occupied by space, that is, the proportion of material powder is greater than 50%. For this reason, the flat plate material members 71₁ to 71_{N} are not broken up by their own weight or being loaded onto a stage using a robot arm and so forth, and it is possible to compress powder material to such an extent that material powder is not scattered as a result of irradiation of irradiation light (laser light).

Also with this embodiment, after forming a cross sectional members 75ⱼ (j=1 to N), sections of the flat plate material member 71ⱼ other than the cross sectional member 75ⱼ are removed, followed by leveling of the surface of the cross sectional member 75ⱼ. It is therefore possible to prevent chips of compressed material remaining on the surface after leveling. As a result it is possible to reliably arrange the next flat plate member on the leveled surface without any gaps.

Also, with this embodiment, since the initially formed cross sectional members 75₁, 75₂, ... also have respective side surfaces shaped when they are formed, it is possible to make the manufactured result conform to the designed shape with good precision.

As a material of the flat plate material members, it is possible, besides the above described pure iron powder, to use a metal powder such as titanium, an alloy powder such as Ni - Mo alloy steel (for example, KIP Sigmalloy 415 (trade name) manufactured by Kawasaki Steel Ltd.), polyamide type plastic powder such as nylon, ceramics powder such as zirconia, or glass powder such as soda glass, and it is possible to similarly perform layered manufacturing.

Here it is necessary to appropriately select the type of laser used for heating in accordance with the material used. For example, even if the material is other than powdered pure iron, if it is a powder of metal or alloy, it is possible to adopt a YAG laser. Also, if the material is powder of metal such as pure iron, or of an alloy, it is also possible to adopt a carbon dioxide laser or a semiconductor laser. Also, with respect to each of the above types of resin or glass, it is possible to adopt a carbon dioxide laser, or for the above-described ceramics it is possible to adopt a YAG laser or a carbon dioxide laser. It is also possible to be a semiconductor laser or YAG laser can be used by mixing an absorbent such as carbon into the resin.

With the above-described embodiment, the stage 41 is capable of movement in the XY axis direction, but if the scanning range of irradiation light from the irradiation optical system 33 is sufficiently wide the stage 41 can be fixed in the XY axis directions. With the above described embodiment movement of the stage 41 in the Z axis direction is performed under the control of the control system, but it is also possible for movement of the stage 41 in the Z axis direction to be carried out manually.

Also with the above described embodiment, adjustment of a Z axis direction positional relationship between the flat plate material members and the focal plane can be carried out by moving the stage 41 in the Z axis direction. Accordingly, it is also possible to adjust the focal position of the irradiation optical system 33 by moving the irradiation optical system.

Also with the above-described embodiment, the material of all the flat plate material members 71₁ to 71_{N} is the same, but it is also possible for respective materials of the flat plate material members to be determined according to respective layer positions of the flat plate material members. In this case, it is possible to manufacture a layer manufactured body with a material having a desired strength according to position of the layer manufactured body in a layer direction.

Also with the above described embodiment, the shape of all the flat plate material members 71₁ to 71_{N} is circular, but it is also possible to use a rectangular flat plate material member 71' such as that shown in Fig. 2A. Further, as shown in Fig. 12B, it is possible to perform layered manufacturing for a large object by making up a material member of a single layer with a multiple array of flat plate material members 71'.

Also, with the above described embodiment, a suction unit 68 has been used, but it is also possible to blow away surplus material sections using an air blower.

It is also possible to carry out shaping of side surface of the cross sectional elements prior to leveling of the cross sectional elements.

Also, the shape of the solid object that is the object of layered manufacturing is not limited to the solid object OBJ of the above described embodiment, and it possible to have any shape.

### INDUSTRIAL APPLICABILITY

As has been described above, a layered manufacturing method and layered manufacturing device of the present invention has powder as a material, and can be adopted in layered manufacturing for making a desired three dimensional object.

## Claims

1. A layered manufacturing method, with powder as a raw material, for forming a desired solid body, comprising first executing steps of:
preparing a plurality of flat plate-shaped material members formed by
compressing material powder: and having a porosity of less than 50%;
irradiating laser light from one direction side to a region of an initial one of the flat plate material members corresponding to a designed cross sectional shape, to form an initial cross sectional element that is hardened after locally heating and melting; and
leveling the one direction side surface of the initial cross sectional element, followed by the repeated execution of steps of
arranging the flat plate material member on the one direction side of part of an already formed section;
irradiating laser light from one side to a region of the flat plate material member corresponding to a designed cross sectional shape of a layered position of the flat plate-shaped material member of a desired solid object, to form a layered cross sectional element that is hardened after locally heating and melting, together with integration of the one direction side with part already formed on an opposite side; and
leveling the one side surface of the layered cross sectional element.

2. The layered manufacturing method of claim 1, wherein the material powder is a powder of metal or alloy.

3. The layered manufacturing method of claim 1, wherein respective materials of the flat plate material members are determined in accordance with respective layer positions of the flat plate material members.

4. The layered manufacturing method of claim 1, further comprising steps of:
removing part of the initial one of the flat plate material members other than the initial cross sectional element, carried out between forming the initial cross sectional element and leveling the initial surface; and
removing part of the layered flat plate material members other than the layered cross sectional element, carried out between formation of the layered cross sectional element and leveling of the layered surface.

5. The layered manufacturing method of claim 1, further comprising a step of:
shaping a side surface of a cross sectional element section formed in the newest, immediately before or immediately after leveling of the initial surface, and immediately before or immediately after leveling of the layered surface.

6. A device for layered manufacturing of a desired solid object, with a plurality of flat plate material members formed by compressing powder raw material as starting material, comprising:
a stage device (40), having a stage (41) for mounting the flat plate material members (71) capable of driving the stage three dimensionally;
conveying means (55) for conveying the plate material members (71) towards the stage (41);
laser light irradiation means (31) or irradiating laser light from one side in order to locally heat and melt a specified region of the flat plate material members; and
surface leveling means (51) for leveling one side surface of a cross sectional element formed by solidifying after being melted by the laser light.

7. The device of claim 6, further provided with surplus material removal means (53) for removing surplus material section other than the cross sectional element.

8. The device of claim 6, further provided with side surface shaping means for shaping a side surface of a cross-sectional element having the one side surface leveled.

## Patentansprüche

1. Schichtherstellungsverfahren mit Pulver als Ausgangsmaterial zur Bildung eines erwünschten Festkörpers, das zuerst das Ausführen der Schritte aufweist:
Vorbereiten von mehreren ebenen plattenförmigen Materialelementen, die durch Zusammendrücken eines Materialpulvers gebildet werden und eine Porosität von weniger als 50% aufweisen;
Einstrahlen von Laserlicht aus einer Richtungsseite auf einen Bereich eines anfänglichen der ebenen Plattenmaterialelemente, der einer vorgegebenen Querschnittsform entspricht, um ein Anfangsquerschnittselement zu bilden, das nach lokalem Erwärmen und Schmelzen gehärtet wird; und
Einebnen der einen Richtungsseitenoberfläche des Anfangsquerschnittselements, dem sich die wiederholte Ausführung der Schritte anschließt:
Anordnen des ebenen Plattenmaterialelements auf der einen Richtungsseite eines Teils eines schon gebildeten Abschnitts;
Einstrahlen von Laserlicht von einer Seite auf einen Bereich des ebenen Plattenmaterialelements, der einer vorgegebenen Querschnittsform einer Schichtposition des ebenen plattenförmigen Materialelements eines erwünschten festen Objekts entspricht, um ein Schichtquerschnittselement zu bilden, das nach lokalem Erwärmen und Schmelzen gehärtet wird, zusammen mit der Integration der Richtungsseite mit einem schon auf einer gegenüberliegenden Seite gebildeten Teil; und
Einebnen der einen Seitenoberfläche des Schichtquerschnittselements.

2. Schichtherstellungsverfahren nach Anspruch 1, wobei das Materialpulver ein Pulver aus einem Metall oder einer Legierung ist.

3. Schichtherstellungsverfahren nach Anspruch 1, wobei jeweilige Materialien der ebenen Plattenmaterialelemente gemäß jeweiliger Schichtpositionen der ebenen Plattenmaterialelemente festgelegt werden.

4. Schichtherstellungsverfahren nach Anspruch 1, das ferner die Schritte aufweist:
Entfernen eines Teils des anfänglichen der ebenen Plattenmaterialelemente, das sich vom Anfangsquerschnittselement unterscheidet, das zwischen dem Bilden des Anfangsquerschnittselements und dem Einebnen der Anfangsoberfläche ausgeführt wird; und
Entfernen eines Teils der ebenen Schichtplattenmaterialelemente, das sich vom Schichtquerschnittselement unterscheidet, das zwischen dem Bilden des Schichtquerschnittselements und dem Einebnen der Schichtoberfläche ausgeführt wird.

5. Schichtherstellungsverfahren nach Anspruch 1, das ferner einen Schritt aufweist:
Formen einer Seitenoberfläche eines Querschnittelementabschnitts, der im neuesten ausgebildet ist, unmittelbar vor oder unmittelbar nach dem Einebnen der Anfangsoberfläche,
und
unmittelbar vor oder unmittelbar nach dem Einebnen der Schichtoberfläche.

6. Vorrichtung zur Schichtherstellung eines erwünschten festen Objekts, mit mehreren ebenen Plattenmaterialelementen, die durch Zusammendrücken eines Pulverausgangsmaterials als
Ausgangsmaterial gebildet werden, mit:
einer Plattformvorrichtung (40), die eine Plattform (41) zum Anbringen der ebenen Plattenmaterialelemente (71) aufweist, die zum dreidimensionalen Antreiben der Plattform imstande ist;
einer Beförderungseinrichtung (55) zum Befördern der Plattenmaterialelemente (81) zur Plattform (41);
einer Laserlichteinstrahlungseinrichtung (31) zur Einstrahlung von Laserlicht von einer Seite, um einen spezifizierten Bereich der ebenen Plattenmaterialelemente lokal zu erwärmen und zu schmelzen; und
einer Oberflächeneinebnungseinrichtung (51) zum Einebnen einer Seitenoberfläche eines Querschnittselements, das durch Verfestigen gebildet wird, nachdem es durch das Laserlicht geschmolzen wird.

7. Vorrichtung nach Anspruch 6, die ferner mit einer Überschussmaterialentfernungseinrichtung (53) zur Entfernung eines Überschussmaterialabschnitts versehen ist, der sich vom Querschnittselement unterscheidet.

8. Vorrichtung nach Anspruch 6, die ferner mit einer Seitenoberflächenformungseinrichtung zur Formung einer Seitenoberfläche eines Querschnittelements versehen ist, dessen eine Seitenoberfläche eingeebnet ist.

## Revendications

1. Procédé de fabrication en couches, recourant à de la poudre comme matière première pour former un corps solide souhaité, comprenant les premières étapes d'exécution suivantes :
préparation d'une pluralité de composants de matière en forme de plaque plane ayant une porosité inférieure à 50 % par compression de poudre de matière ;
irradiation d'une lumière laser depuis un côté d'irradiation directionnelle vers une zone d'un composant initial des composants de matière en forme de plaque plane correspondant à une forme de section transversale envisagée, pour former un élément à section transversale initiale qui est solidifié après chauffage et fusion locaux ; et
aplanissement de la surface de côté d'irradiation directionnelle de l'élément à section transversale initiale,
suivi de l'exécution répétée des étapes de
disposition du composant de matière en forme de plaque plane sur le côté d'irradiation directionnelle d'une partie avec une section déjà formée ;
irradiation d'une lumière laser depuis un côté vers une zone du composant de matière en forme de plaque plane correspondant à une forme de section transversale envisagée d'une position de couche du composant de matière en forme de plaque plane d'un objet solide souhaité, pour former un élément à section transversale stratifié qui est solidifié après chauffage et fusion locaux, le côté d'irradiation directionnelle étant intégré à la partie déjà formée sur un côté opposé ; et
aplanissement de la surface de côté de l'élément à section transversale stratifié.

2. Procédé de fabrication en couches selon la revendication 1, où la poudre de matière est une poudre d'un métal ou d'un alliage.

3. Procédé de fabrication en couches selon la revendication 1, où les matières respectives des composants de matière en forme de plaque sont déterminées en fonction des positions de couche correspondantes desdits composants de matière en forme de plaque.

4. Procédé de fabrication en couches selon la revendication 1, comprenant en outre les étapes suivantes :
retrait d'une partie du composant initial des composants de matière en forme de plaque autre que l'élément à section transversale initiale, exécuté entre la formation de l'élément à section transversale initiale et l'aplanissement de surface initiale ; et
retrait d'une partie des composants stratifiés de matière en forme de plaque autre que l'élément à section transversale stratifié, exécuté entre la formation de l'élément à section transversale stratifié et l'aplanissement de la surface stratifiée.

5. Procédé de fabrication en couches selon la revendication 1, comprenant en outre une étape de :
profilage d'une surface de côté d'une section d'élément à section transversale dernièrement formée, immédiatement avant ou immédiatement après l'aplanissement de la surface initiale, et
immédiatement avant ou immédiatement après l'aplanissement de la surface stratifiée.

6. Dispositif pour la fabrication en couches d'un objet solide souhaité, avec une pluralité de composants de matière en forme de plaque formés par compression de poudre de matière brute en tant que matière de départ, comprenant :
un dispositif à plateau (40), comportant un plateau (41) de montage des composants de matière en forme de plaque plane (71), prévu pour une commande tridimensionnelle du plateau ;
un moyen de transport (55) pour le transport vers le plateau (41) des composants de matière en forme de plaque plane (81) ;
un moyen de rayonnement laser (31) pour l'irradiation de lumière laser depuis un côté, pour un chauffage et une fusion locaux d'une zone spécifiée des composants de matière en forme de plaque plane ; et
un moyen d'aplanissement de surface (51) pour l'aplanissement d'une surface de côté d'un élément à section transversale formé par solidification après fusion par la lumière laser.

7. Dispositif selon la revendication 6, comprenant en outre un moyen de retrait de matière en excédent (53) pour le retrait dé la section de matière en excédent autre que l'élément à section transversale.

8. Dispositif selon la revendication 6, comprenant en outre un moyen de profilage de surface de côté, pour le profilage d'une surface de côté d'un élément à section transversale dont la surface de côté est aplanie.
